(19) Europäisches Patentamt
European Patent Office
Office européen des brevets

(11) **EP 4 353 518 A1**

(12) **EUROPEAN PATENT APPLICATION**

(43) Date of publication:
**17.04.2024 Bulletin 2024/16**

(21) Application number: **22465559.7**

(22) Date of filing: **13.10.2022**

(51) International Patent Classification (IPC):
**B60L 53/14** $^{(2019.01)}$     **B60L 58/20** $^{(2019.01)}$
**B60L 58/21** $^{(2019.01)}$     **B60R 16/03** $^{(2006.01)}$
**B60L 1/00** $^{(2006.01)}$

(52) Cooperative Patent Classification (CPC):
**B60L 58/20; B60L 1/00; B60L 3/0046;**
**B60L 3/0092; B60L 53/14; B60L 58/21;**
**B60R 16/03;** B60L 2210/10; B60L 2240/547;
B60L 2240/549

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Vitesco Technologies Germany GmbH
93055 Regensburg (DE)**

(72) Inventors:
• **Hövermann, Markus
  81737 Munich (DE)**
• **Alexa, Alex
  81737 Munich (DE)**
• **Trumpfheller, Michael
  81737 Munich (DE)**

(74) Representative: **Vitesco Technologies
Landsberger Straße 187 - Haus D
80687 München (DE)**

(54) **HIGH VOLTAGE JUNCTION DEVICE FOR A HIGH VOLTAGE BATTERY OF AN ELECTRIC VEHICLE AND HIGH VOLTAGE BATTERY SYSTEM**

(57) The HV junction device (JD) comprises a first battery terminal (B+) for connecting the first battery pack terminal (BP2+) of the second battery pack (BP2) and a second battery terminal (B-) for connecting the second battery pack terminal (BP1-) of the first battery pack (BP1). Furthermore, the HV junction device (JD) comprises a high voltage output with a first high voltage load terminal (HVL+) and a second high voltage load terminal (HVL-) for connecting a high voltage load group with one or more high voltage loads. The HV junction device (JD) also comprises a high voltage input with a first high voltage charge terminal (HVC+) and a second high voltage charge terminal (HVC-) for connecting an electric vehicle supply equipment. The HV junction device (JD) comprises a first contactor (C-DC+) and a second contactor (C-DC-) and the first battery terminal (B+) is connected to the first high voltage charge terminal (HVC+) via the first contactor (C-DC+) and the second battery terminal (B-) is connected to the second high voltage charge terminal (HVC-) via the second contactor (C-DC-). Furthermore, the HV junction device (JD) comprises a third contactor (C-M+) and a fourth contactor (C-M-) and the first battery terminal (B+) is connected to the first high voltage load terminal (HVL+) via the third contactor (C-M+) and the second battery terminal (B-) is connected to the second high voltage load terminal (HVL-) via the fourth contactor (C-M-). The junction device (JD) comprises a fifth contactor (C-BP1) and a sixth contactor (C-BP2) and a node (N) connectable to the second battery pack terminal (BP2-) of the second battery pack (BP2) and the first battery pack terminal (BP1+) of the first battery (BP1) for providing a voltage level of the connection between the first battery pack (BP1) and the second battery pack (BP2). The node (N) is connected via the fifth contactor (C-BP1) to the first high voltage charge terminal (HVC+) and via the sixth contactor (C-BP2) to the second high voltage charge terminal (HVC-).

Fig. 3

**Description**

Technical Field

The present disclosure relates to a HV junction device for a high voltage (HV) battery for an electric vehicle. The present disclosure also relates to a HV battery system comprising the HV junction device and a method and an apparatus to operate the HV battery system. Furthermore, the present disclosure relates to a computer program and a computer-readable medium.

Background

In the battery vehicle market, there is a clear trend and strong demand to

a) decrease the charging time,
b) increase the availability at component failure (fail operational system),
c) reduce system cost,
d) increase efficiency at driving and charging,
e) maximize the travel range,
f) provide flexible platform solutions.

Current solution to reduce the charging time (a) is to increase the battery voltage in the vehicle from "400V" up to "800V". The "800V"-technology is also an important enabler to increase the efficiency (d), maximize the travel range (e) and to reduce the system cost (c).

In this disclosure the terms "800V" and "400V" denote certain voltage ranges. The term "400V" is used for a voltage range from 60V to 500V. The term "800V" is used for a voltage range from 500V to 1000V.

One drawback of "800V"-topologies is the limited availability of "800V"-DC-charging stations today. Since the number of "800V"-EVSE (Electric Vehicle Supply Equipment) will only increase slowly in the next few years there is a strong need to provide technical solutions for charging a "800V"-vehicle also on "400V"-EVSE.

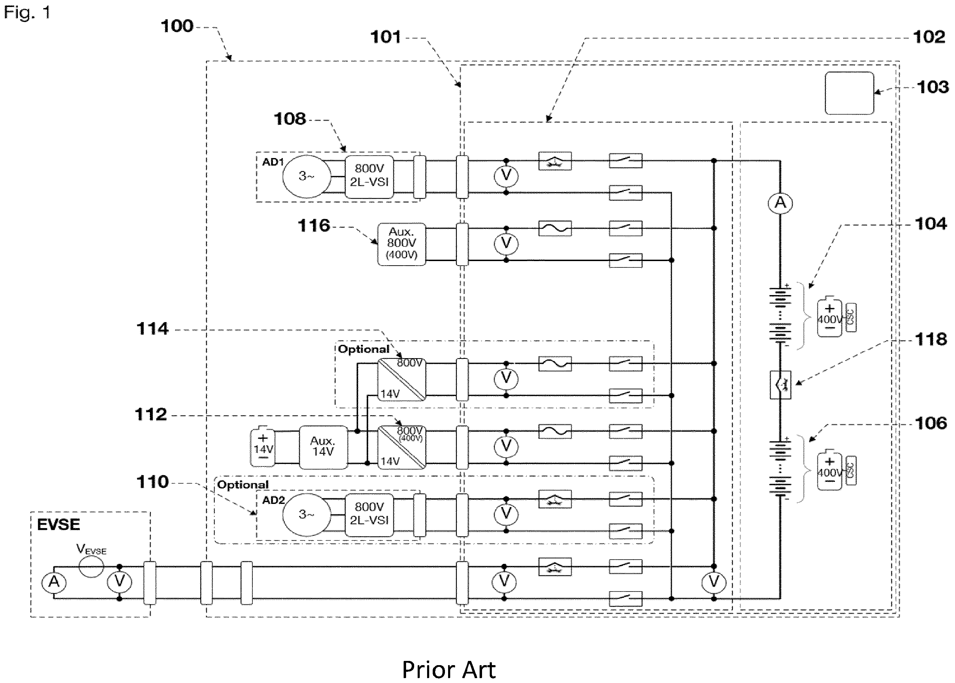

Figure 1 shows a "800V"- battery system for a Battery Electric Vehicle 100. The battery system 101 of the vehicle 100 comprises a power distribution unit (PDU) 102, a battery management system (BMS) 103, and a battery with two battery packs 104, 106. All HV loads, like main axle-drive 108 and redundant axle-drive 110, main and redundant DC/DC converter for 14V-boardnet supply 112, 114 and HV-aux-loads 116, operate at "800V". The battery packs 104, 106 of the battery are connected in series. Each battery pack 104, 106 comprises serial and parallel connected cells. Between the two battery packs 104,106 an overcurrent protection element 118 is located, e. g. a fuse or pyro-fuse. This protection element is a standard functional safety measure to protect the cells from overcurrent. The PDU comprises a protection element and two contactors for each HV load.

The redundant axle-drive and the redundant HV/14V-DCDC-converter are optional configurations and typically used to provide better driving performance and to supply more comfort function on 14V-level. But a full redundancy in the drive functionality, as required for autonomous driving, cannot be provided by this topology, neither with the second axle-drive and the second HV/14V-DCDC. The reason for this is the missing redundancy of the HV-supply.

Autonomous driving vehicle require topology solutions that can provide drive functionality also at a defect in the powertrain system. In this "limp-home" mode a reduction in driving performance and comfort is acceptable. The main requirement for this is the redundancy in the battery system, as it represents the energy supply for all relevant functions such as the (axle)drive(s), cooling and on-board power supply. In addition to the redundancy in the HV-energy supply a redundant drive system and 14V-supply is required to provide full redundancy for driving.

At autonomous driving vehicle the battery system is split up in several main battery packs (BPs). Typically, either in two BPs with the same voltage and 50% capacity or in two BPs with the same capacity and 50% voltage. If one BP is defecting the other BP can provide the required energy for limp-home.

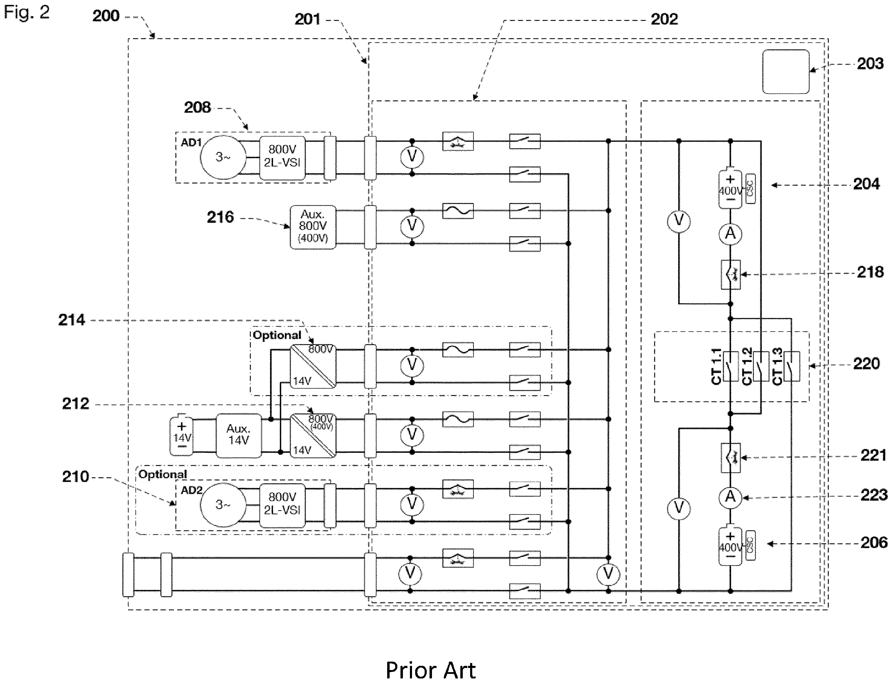

Figure 2 shows "800V"- battery system for a Battery Electric Vehicle 200 which can provide the compatibility to "400V"- and "800V"- Electric Vehicle Supply Equipment (EVSE). The "800V"-battery is split up in two "400V"-battery packs 204, 206. Both battery packs 204, 206 have the same number of cells. The battery circuit arrangement comprises a battery switch matrix 220. The battery switch matrix 220 comprises three switches CT1.1, CT1.2 and CT1.3. Using the switches CT1.1, CT1.2, CT1.3, the battery packs 204, 206 can be connected in series for "800V"-driving and "800V"-DC-charging or in parallel for "400V"-DC-charging. The standard configuration is the series connection of both battery packs 204, 206 where all HV-loads operate at "800V".

In comparison to the standard "800V"-topology shwown in Figure 1, the "800V"-battery circuit arrangement of Figure 2 comprises in addition the battery switch matrix 220 with the battery switches CT1.1, CT1.2 and CT1.3, a second overcurrent protection element 221 (e.g. pyro-fuse) and a second battery-current-sensor 223.

All HV-loads normaly operate at "800V". The battery-switches CT1.1, CT1.2, CT1.3 can be used to connect the battery packs in series (battery voltage is "800V"), in parallel (battery voltage is "400V") or disconnect a defect battery pack 204, 206. In this case the remaining battery voltage is "400V".

The topology shown in Figure 2 allows two different DC-charging modes:

- Mode 1: "800V"-S-charging (both BPs in series)
- Mode 2: "400V"-P-charging (both BPs in parallel)

"800V"-S-charging is the standard charging mode. It offers the highest charging performance and therefore the shortest possible charging time. The "400V"-P-charging enables very high charging performance even at "400V"-EVSE, but this mode requires to balance the battery packs 204, 206 to prevent high inrush currents trough the battery switches CT1.2 and CT1.3.

It is an object of this disclosure to provide a more flexible and/or more efficient high voltage junction device for an electric vehicle which can be provided at lower costs.

Summary

The above-mentioned object is achieved by the features of independent claims. Advantageous embodiments are given in the dependent claims.

According to a first aspect the above-mentioned object is achieved by a high voltage (HV) junction device for a high voltage battery of an electric vehicle. The high voltage battery comprises a first battery pack and a second battery pack connected in series. The first battery pack and the second battery pack each comprises a first battery pack terminal and a second battery pack terminal. A connection interconnecting the second battery pack terminal of the second battery pack and the first battery pack terminal of the first battery pack is free of any contactors and relays. In the connection interconnecting the second battery pack terminal of the second battery pack and the first battery pack terminal of the first battery pack a first overcurrent protection device related to the first battery pack and a second overcurrent protection device related to the second battery pack may be arranged, wherein each of the overcurrent protection devices may comprise a fusible cut-out or a pyro fuse. Alternatively, the first overcurrent protection device and the second overcurrent protection device may be arranged in the HV junction device in the negative supply line of the first battery pack and the positive supply line of the first battery pack, respectively. The first overcurrent protection device may comprise a current sensor and/or a voltage sensor and may be configured to measure a current through the first battery pack and/or a voltage at an output of the first battery pack. Also, the second overcurrent protection device may comprise a current sensor and/or a voltage sensor and may be configured to measure a current through the second battery pack and/or a voltage at an output of the second battery pack, respectively.

The HV junction device comprises a first battery terminal for connecting the first battery pack terminal of the second battery pack and a second battery terminal for connecting the second battery pack terminal of the first battery pack.

Furthermore, the HV junction device comprises a high voltage output with a first high voltage load terminal and a second high voltage load terminal for connecting a high voltage load group with one or more high voltage loads. The high voltage output may comprise several connectors connected in parallel for connecting several high voltage loads such that the high voltage loads are connected in parallel.

The HV junction device also comprises a high voltage input with a first high voltage charge terminal and a second high voltage charge terminal for connecting an electric vehicle supply equipment.

The HV junction device comprises a first contactor and a second contactor and the first battery terminal is connected to the first high voltage charge terminal via the first contactor and the second battery terminal is connected to the second high voltage charge terminal via the second contactor.

Furthermore, the HV junction device comprises a third contactor and a fourth contactor and the first battery terminal is connected to the first high voltage load terminal via the third contactor and the second battery terminal is connected to the second high voltage load terminal via the fourth contactor. The junction device comprises a fifth contactor and a sixth contactor and a node connectable to the second battery pack terminal of the second battery pack and the first battery pack terminal of the first battery pack for providing a voltage level of the connection between the first battery pack and the second battery pack. The node is connected via the fifth contactor to the first high voltage charge terminal and via the sixth contactor to the second high voltage charge terminal.

In this disclosure a contactor is an electrically controlled switch used for switching an electrical power circuit providing a galvanic isolation.

The HV junction device provides the following advantages:

- Less (only two) contactors are required to provide the "400V"-charging and "800V"-charging compatibility and therefore can be provided at lower costs.

- The HV junction device provides full redundancy at HV-supply if one of the battery packs gets defect without additional components.
- The HV junction device allows that a smaller number of passive components, in particular contactors, are in the power loop at "800V"-driving and "800V"-charging mode. Thus, a high efficiency can be achieved.
- The HV junction device allows the combination of battery packs with different voltage levels and different cell technology. This enables more and better scaling options in vehicle performance and total vehicle battery capacity and therefore lower costs at OEM side. In particular, no symmetrical installation space for both battery packs is required. The combination of different battery pack sizes in the vehicle enables the usage of different installation spaces which also results to lower cost at OEM side.
- During "800V"-charging and "400V"-charging all HV-components are continuously supplied with their nominal voltage. In contrast to the topology shown in Figure 2 the HV junction device enables the full performance of all HV-aux-loads at all charging modes.
- The HV junction device is also applicable to charge topologies with (much) more than 1000V (e.g., 1500V) at charging stations with max 1000V, in particular for commercial vehicles.

In at least one embodiment according to the first aspect the HV junction device comprises a third battery terminal for connecting the second battery pack terminal of the second battery pack and a fourth battery terminal for connecting the first battery pack terminal of the first battery pack. In this case the node is connected via the first overcurrent protection device and/or via a current sensor device or directly to the third battery terminal. Furthermore, the node is connected via the second overcurrent protection device and/or a further current sensor device or directly to the fourth battery terminal. Using this topology, it is possible to connect battery packs to the junction box, which are separate units, for instance separately housed units. The connection interconnecting the second battery pack terminal of the second battery and the first battery pack terminal of the first battery pack may be part of the HV junction device.

In at least one embodiment according to the first aspect the HV junction device comprises a further battery terminal for connecting the second battery pack terminal of the second battery pack and the first battery pack terminal of the first battery pack. In this case the node is directly connected to the further battery terminal. Using this topology, it is possible to connect battery packs to the junction box, which are housed together in one unit, wherein for instance each battery pack comprises a fusible cut-out or a pyro fuse.

In at least one embodiment according to the first aspect the HV junction device comprises at least one further high voltage output with a first terminal and a second terminal, wherein the first battery terminal is connected to the first terminal of the further high voltage output via a seventh contactor and the second battery terminal is connected to the second terminal of the further high voltage output via an eighth contactor. Thus, different HV loads or HV load groups can be connected and disconnected to the high voltage battery independently from each other.

According to a second aspect the above-mentioned object is achieved by a high voltage battery system comprising a high voltage battery for an electric vehicle. The high voltage battery comprises a first battery pack and a second battery pack connected in series. The first battery pack and the second battery pack each comprises a first battery pack terminal and a second battery pack terminal. In a connection interconnecting the second battery pack terminal of the second battery pack and the first battery pack terminal of the first battery pack a first overcurrent protection device related to the first battery pack and a second overcurrent protection device related to the second battery pack each comprising a fusible cut-out, or a pyro fuse are arranged. The connection interconnecting the second battery pack terminal of the second battery pack and the first battery pack terminal of the first battery pack is free of any contactors and relays. Furthermore, the HV battery system comprises the HV junction device according to the first aspect.

In at least one embodiment according to the second aspect the first battery pack and the second battery pack have a different number of cells.

In at least one embodiment according to the second aspect the first battery pack and the second battery pack comprise different types of cells.

Advantageous embodiments of the first aspect are also valid for the second aspect.

According to a third and fourth aspect the above-mentioned object is achieved by a method and a corresponding apparatus for operating the high voltage battery system according to the second aspect. During a charging mode, when an electric vehicle supply equipment is connected to the first high voltage charge terminal and the second high voltage charge terminal and high voltage direct current (DC) is received from the electric vehicle supply equipment the switching state of each of the first, second, fifth and sixth contactor is controlled such that the high voltage DC is alternatingly routed to the first battery pack and the second battery pack.

In at least one embodiment according to the third aspect and fourth aspect a switching frequency for the alternating charging is selected dependent on a state of charge of the first battery pack and/or dependent on a state of charge of the second battery pack. In particular, the switching frequency for the alternating charging can be adapted to find the best compromise between low number of switching events and acceptable state of charge-delta of both battery packs.

According to a fifth aspect the above-mentioned object is achieved by computer program comprising instructions which, when the program is executed by a controller or processor of a control unit of a HV battery system according the second aspect, cause the control unit to carry out the steps of the method according to the third aspect.

According to a sixth aspect the above-mentioned object is achieved by a computer-readable medium having stored there on the computer program according to the fifth aspect. The computer-readable medium may be a non-volatile computer-readable medium.

Advantageous embodiments of the third and fourth aspect are also valid for the fifth and sixth aspect.

In the context of this document, mentioning of such a computer program is synonymous with the term program element and/or a computer program product containing instructions for controlling a computer system to suitably coordinate the operation of a system or method to achieve the effects associated with the method of the invention.

The computer program may be implemented as computer readable instruction code in any suitable programming language such as JAVA, C++, etc. The computer program may be stored on a computer-readable storage medium (CD-Rom, DVD, Blu-ray disc, removable drive, volatile or non-volatile memory, built-in memory/processor, etc.). The instruction code may program a computer or other programmable device, such as in particular a control unit for an engine of a motor vehicle, in such a way that the desired functions are executed. Further, the computer program may be provided on a network, such as the Internet, from which it may be downloaded by a user as needed.

The present disclosure is described in greater detail hereinafter with reference to the accompanying figures showing embodiments of the disclosure. These and other aspects of the present disclosure will become more fully understood upon a review of the detailed description, which follows. Other aspects, features, and embodiments of the present disclosure will become apparent to those of ordinary skill in the art, upon reviewing the following description of specific, exemplary embodiments of the present disclosure in conjunction with the accompanying figures. While features of the present disclosure may be discussed relative to certain embodiments and figures below, all embodiments of the present disclosure can include one or more of the advantageous features discussed herein. In other words, while one or more embodiments may be discussed as having certain advantageous features, one or more of such features may also be used in accordance with the various embodiments of the disclosure discussed herein. In similar fashion, while exemplary embodiments may be discussed below as device, system, or method embodiments it should be understood that such exemplary embodiments can be implemented in various devices, systems, and methods.

Brief Description of the Drawings

Fig. 1 illustrates a battery system according to the prior art,

Fig. 2 illustrates a further battery system according to the prior art,

Fig. 3 illustrates a simplified exemplary circuit diagram of an embodiment of a high voltage battery system,

Fig. 4 illustrates the energy flow and voltage levels of the HV battery system HVBS shown in Figure 3 in a charging mode,

Fig. 5 illustrates another simplified exemplary circuit diagram of an embodiment of the high voltage battery system,

Fig. 6 illustrates the energy flow and the voltage levels of the high voltage battery system shown Fig. 5 in a "limp-home mode",

Figure 7 illustrates another simplified exemplary circuit diagram of an embodiment of a high voltage battery system,

Figures 8a and 8b illustrate the energy flow and the voltage levels of the high voltage battery system of Figure 3 in an alternating charing mode and

Figure 9 illustrates the energy flow and the voltage levels of the high voltage battery system of Figure 7 in an alternating charing mode.

Detailed Description of Embodiments

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, certain structures and components are shown in block diagram form in order to avoid obscuring such concepts.

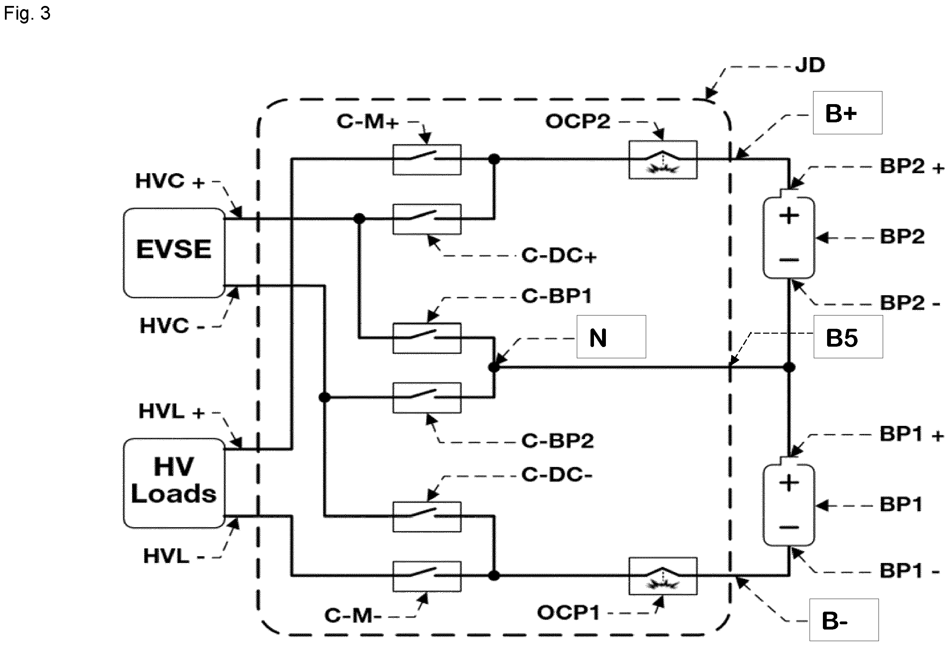

In figures 3 to 9, the same reference signs are used for elements with essentially the same function, but these elements need not be identical in all details.

It is noted that when an element is described as "connected" or "coupled" to another element, the element may be directly connected or coupled to the other element or intermediate elements may be present. In contrast, when an element is described as "directly" "connected" or "coupled" to another element, no intermediate elements are present. Other expressions used to describe the relationship between elements shall be interpreted in a like manner (e.g., "between" versus "directly between," "adjacent" versus "directly adjacent," etc.).

Figure 3 shows a simplified exemplary circuit diagram of an embodiment of a high voltage (HV) battery system HVBS for an electric vehicle 100, in particular for a battery electric vehicle (BEV).

The HV battery system HVBS comprises a HV junction device JD and a first battery pack BP1 and a second battery pack BP2. The HV junction device JD provides "800V"-charing and "400V"-charging compatibility and full redundancy at high voltage supply (HV-supply) and optionally at low voltage supply (LV-supply) and drive-system.

Both battery packs BP1, BP2 comprise serial and parallel connected battery cells. For instance, the battery cells are clustered in modules. The number of serials connected cells defines the voltage level of a powertrain topology of the electric vehicle 100. The number of in serial connected cells in a battery pack is, for example 80 to 112 cells with a range of a maximal voltage $V_{max}$ = 336 V to 470V) for the "400V".

Each of the first battery pack BP1 and the second battery pack BP2 comprises a first battery pack terminal BP1+, BP2+ and a second battery pack terminal BP1-, BP2-.

The HV junction device JD comprises a high voltage output for connecting a high voltage load group, wherein the high voltage output comprises a first high voltage load terminal HVL+ and a second high voltage load terminal HVL-. The HV load group may comprise one or more HV loads

In addition, the HV junction device JD comprises a high voltage input for connecting an electric vehicle supply equipment, wherein the high voltage input comprises a first high voltage charge terminal HVC+ and a second high voltage charge terminal HVC-.

The first battery pack terminal BP2+ of the second battery pack BP2 is connected to the first high voltage charge terminal HVC+ via a first contactor C-DC+ and the second battery pack terminal BP1- of the first battery pack BP1 is connected to the second high voltage charge terminal HVC- via a second contactor C-DC-.

The first battery pack terminal BP2+ of the second battery pack BP2 is connected to the first high voltage load terminal HVL+ via a third contactor C-M+ and the second battery pack terminal BP1- of the first battery pack BP1 is connected to the second high voltage load terminal HVL- via a fourth contactor C-M-. The second battery pack terminal BP2- of the second battery pack BP2 and the first battery pack terminal BP1+ of the first battery pack BP1 are connected via a fifth contactor C-BP1 to the first high voltage charge terminal (HVC+) and via a sixth contactor C-BP2 to the second high voltage charge terminal (HVC-).

The connection interconnecting the second battery pack terminal BP2- of the second battery pack BP2 and the first battery pack terminal BP1+ of the first battery pack BP1 is free of any contactors and relays.

The HV junction device JD may comprise a first overcurrent protection device OCP1 related to the first battery pack BP1 and a second overcurrent protection device OPC2 related to the second battery pack BP2, wherein each overcurrent protection device OCP1, OCP2 comprises a fusible cut-out or a pyro fuse

Preferably, the first overcurrent protection device is arranged in the HV junction device in the negative supply line of the first battery pack and the second overcurrent protection device is arranged in the HV junction device in the positive supply line of the second battery pack. The advantage of this position of overcurrent protection devices OCP1, OCP2 is that they are inside of the HV junction device JD and only three contacts to the battery packs BP1, BP2 are required.

Alternatively, the first overcurrent protection device OPC1 related to the first battery pack BP1 and the second overcurrent protection device OCP2 may be arranged in a connection interconnecting the second battery pack terminal BP2- of the second battery pack BP2 and the first battery pack terminal BP1+ of the first battery pack BP1 are arranged.

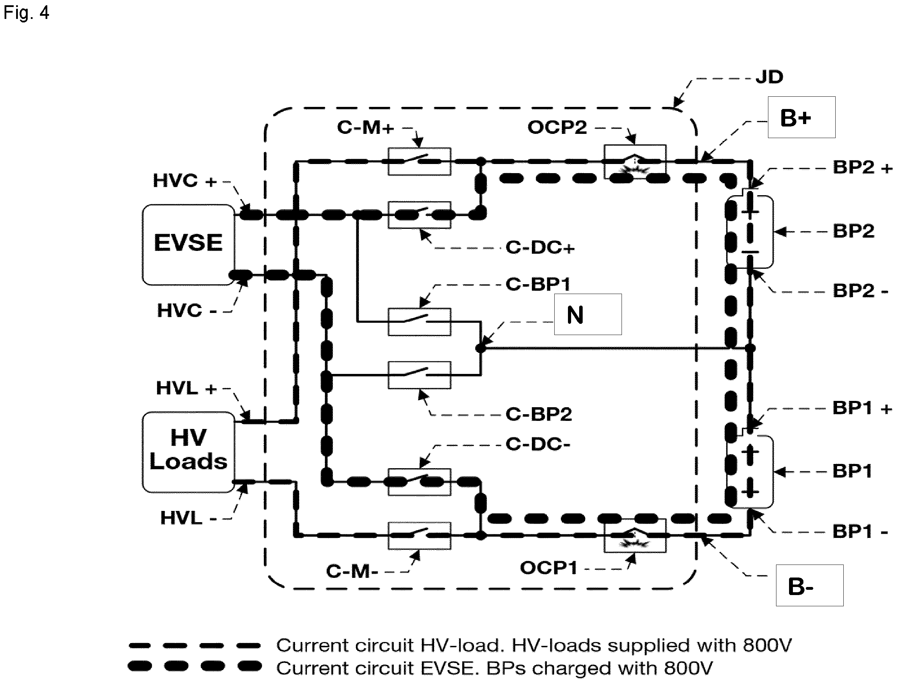

Fig. 4 shows the energy flow and voltage levels of the HV battery system HVBS shown in Figure 3 in a "800V"-charging mode when the first battery pack BP1 and the second battery pack BP2 are connected in series. In this case the first to fourth contactor C-DC+, C-DC-, C-M+ and C-M- are in a closed state and the fifth and sixth contactor C-BP1, C-BP2 are in an open state. Thus, in this mode the "800V" is supplied to the HV load group.

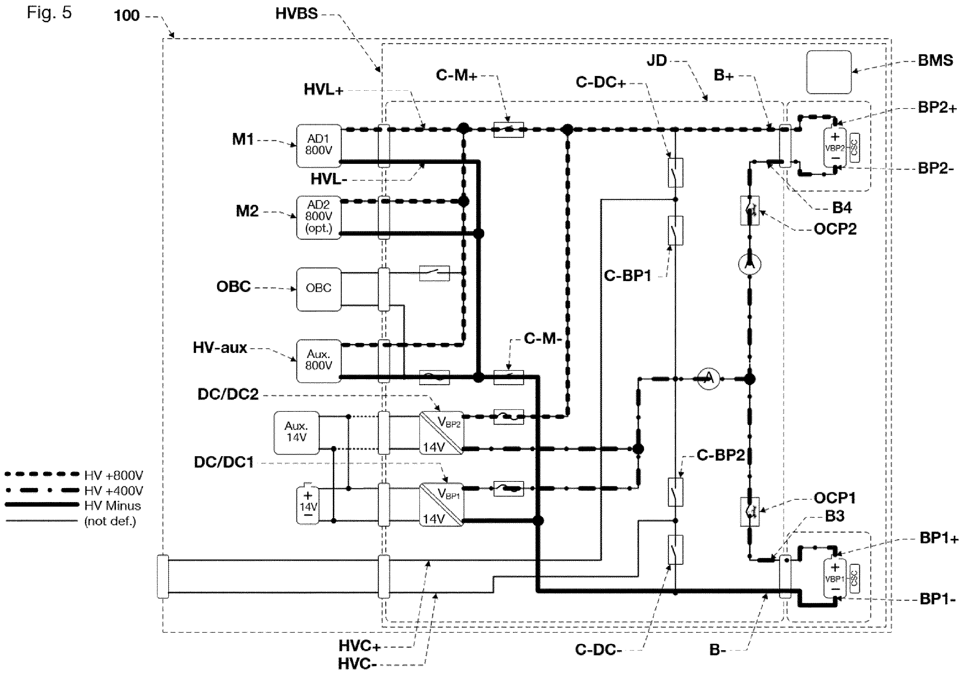

Fig. 5 shows another simplified exemplary circuit diagram of an embodiment of a high voltage (HV) battery system HVBS for an electric vehicle 100, in particular for a battery electric vehicle (BEV). In contrast to the HV battery system HVBS shown in

Figures 3 and 4 the high voltage output of the HV junction device JD shown in Figure 5 comprises several connectors connected in parallel for connecting several high voltage loads such that the high voltage loads are connected in parallel. The HV voltage group comprises for example a first axle drive M1 and a redundant second axle drive M2, a fist direct-current to direct-current (DC/DC) converter DC/DC1 and an optional second DC/DC converter DC/DC2 as well as further auxiliary high voltage loads, which are for example non-safety relevant. Both inputs of the first DC/DC converter DC/DC1 are connected contactor-less to the first battery pack BP1 and both inputs of the second DC/DC converter DC/DC2 are connected contactor-less to the second battery pack BP2. Thus, there are not any contactors arranged in the connection interconnecting the DC/DC converts DC/DC1, DC/DC2 and the battery packs BP1, BP2.This solution enables continous supply of the 14V-boardnet even during mode change and without additional 14V-battery.

In the embodiment shown in Figure 5 in the connection interconnecting the second battery pack terminal BP2- of the second battery pack BP2 and the first battery pack terminal BP1+ of the first battery pack BP1 a first overcurrent protection device OPC1 related to the first battery pack BP1 and a second overcurrent protection device OCP2 related to the second battery pack BP2 each comprising a fusible cut-out, or a pyro fuse are arranged.

Furthermore, Figure 5 shows an energy flow and voltage levels in the HV battery system HVBS in a normal "800V"-driving mode. In this normal "800V"-driving mode the first battery pack BP1 and the second battery pack BP2 are connected in series. The third contactor C-M+ and fourth contactor C-M- are in a closed state and the first, second, fifth and sixth contactor C-DC+, C-DC-, C-BP1, C-BP2 are in an open state.

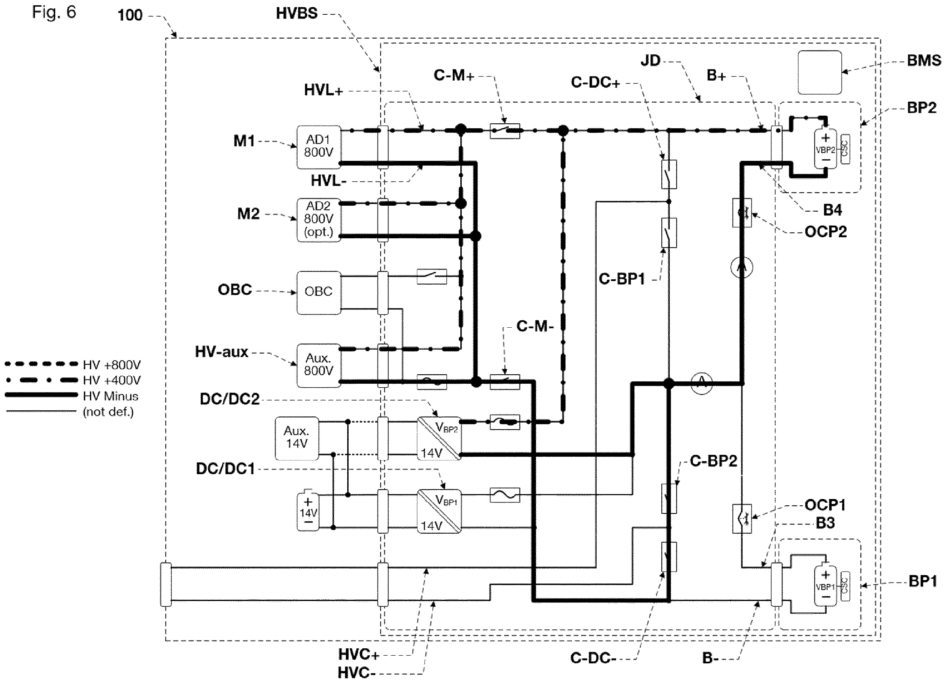

Fig. 6 shows the energy flow and the voltage levels of the HV battery system HVBS shown Fig. 5, wherein the first battery pack BP1 comprises a defect. Because of the defect the first overcurrent protection device OPC1 is blown or triggered and the connection between the first battery pack BP1 and the second battery pack BP2 is interrupted.

The defect-less second battery pack BP2 is connected via the second contactor C-DC-, sixth contactor C-BP2, fourth contactor C-M- and the third contator C-M+ to the axle-drives and HV-aux-loads. The 14V-boardnet supply is provided by the second DC/DC convert DC/DC2. Both inputs of the second DC/DC converter DC/DC2 are connected contactor-less to the second battery pack BP2. This solution enables continous supply of the 14V-boardnet even during this defect mode without an additional 14V-battery.

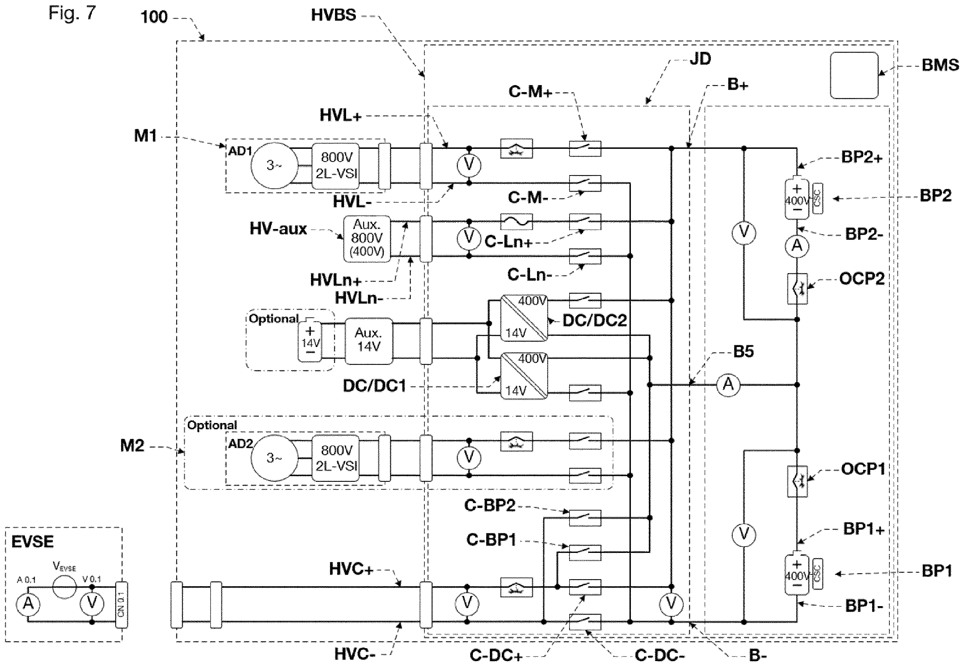

Figure 7 shows another simplified exemplary circuit diagram of an embodiment of a high voltage battery system HVBS for an electric vehicle 100, in particular for a battery electric vehicle (BEV).

In contrast to embodiment shown in Figures 5 and 6 the the HV junction device JD comprises at least one further high voltage output with a first terminal HVLn+ and a second terminal HVLn-. The first battery terminal B+ is connected to the first terminal HVLn+ via a seventh contactor C-Ln+ and the second battery terminal B- is connected to the second terminal HVLn- via an eighth contactor C-Ln-. In Figure 7 in addition both inputs of the second axle drive M2 are connected via additional contactors to the first terminal B+ and the second battery terminal B-, respectively. Furthermore, a positive input of the second DC/DC-converter and a negative input of the first DC/DC converter are each connected via a contactor to the terminal B+ and the second battery terminal B-, respectively.

Thus, in this embodiment the auxiliary high voltage loads, the first axle drive, the second axle drive, and the DC/DC-converter group can be disconnected from the battery packs BP1, BP2 independently from each other.

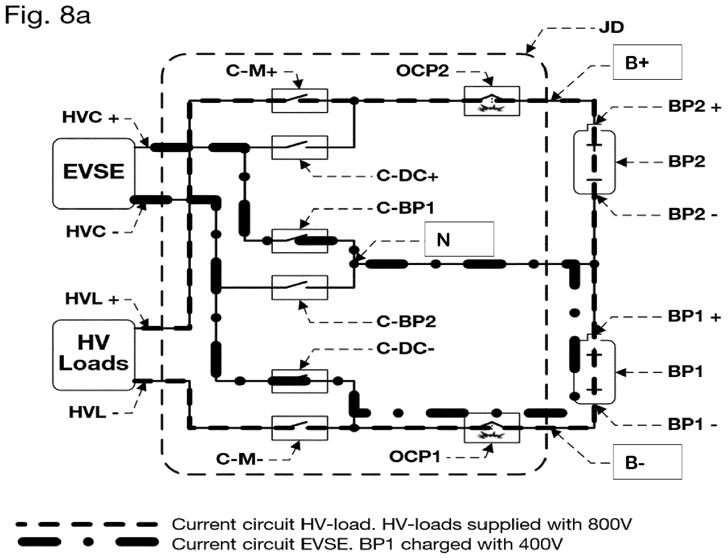

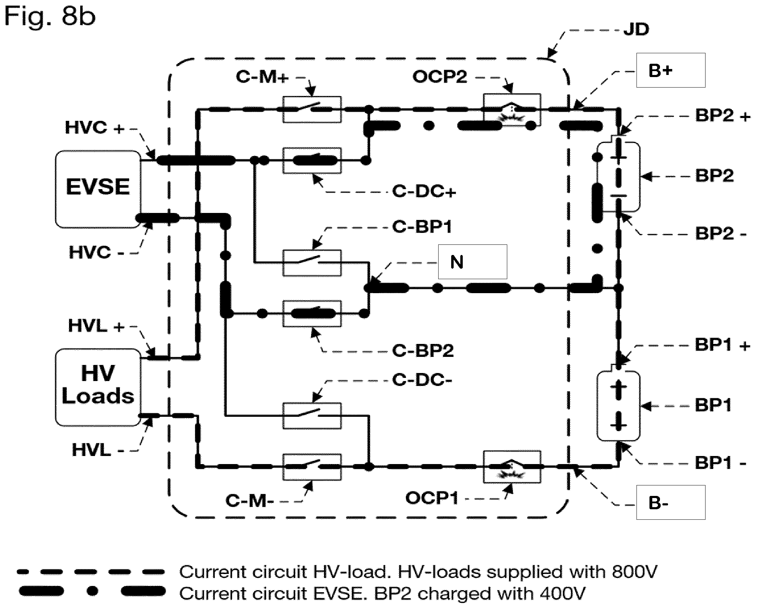

Figures 8a and 8b show the energy flow and the voltage levels of the HV battery system HVBS according to Figures 3 in an alternating charing mode. In Figure 8a the first battery pack BP1 is charged. In Figure 8b the second battery pack BP2 is charged. The topology of the HV junction device JD allows an individually/alternating charging of both battery packs BP1, BP2. The HV-loads are supplied with their nominal voltage of 800V.

During the alternating charging mode, when an electric vehicle supply equipment is connected to the first high voltage charge terminal HVC+ and the second high voltage charge terminal HVC- and high voltage direct current, DC, is received from the electric vehicle supply equipment, a switching state of each of the first, second, fifth and sixth contactor C-DC+,C-DC-,C-BP1, C-BP2 is controlled by a control unit such that the high voltage DC is alternatingly routed to the first battery pack BP1 and the second battery pack BP2.

The control unit can also be named battery management system BMS. The control unit is configured to send control signals directly or indirectly to the contactors of the HV junction device JD for controlling the switching state of the contactors. This battery management system BMS may be part of the high voltage battery system HVBS or may be assigned to the high voltage battery system HVBS. The control unit may comprise a controller or processor which is configured to execute instructions of a program, which cause the control unit to control the switching states of the contactors of the HV junction device JD such that the high voltage DC is alternatingly routed to the first battery pack BP1 and the second battery pack BP2. The control unit may be further configured to control the pyro-fuses.

A switching frequency for the alternating charging can be adapted to find the best compromize between low number of switching events and acceptable a state-of-charge-delta (SoC-delta) of both battery packs.

Assuming a maximum SoC-delta between battery pack 1 and battery pack 2 of 3%, a total battery capacity of 75kWh and a charging performance of 100kW @"400V"-EVSE, the duration of one charging periode is about 1.5min. In this example 20 switchover events are required to charge both battery packs from 20% to 80%.

During "800V"- and "400V"-charging all HV-components are continously supplied with there nominal voltage. The HV battery system HVBS, in particular the HV junction device JD, enables the full performance of all HV-aux-loads at all charging modes.

Since the topology of the HV battery system HVBS, in particular the HV junction device JD, does not provide for a parallel connection of the battery packs no measueres for battery balancing are required.

Another advantage of the proposed HV battery system HVBS, in particular of the proposed HV junction device JD, is a higher degree of freedom in the combination of the battery packs.

Thus, the first battery pack BP1 and the second battery pack BP2 may have a different number of cells and/or comprise different types of cells.

A parallel charging of battery packs requires the same (or at least very similar) voltages of both battery packs. A combination of battery packs with different number of cells or even a combination of battery packs s with different type of cells (e.g. lithium nickel cobalt manganese oxide (NMC) and Lithium iron phosphate (LiFeP)) is not possible. In contrast to that the proposed HV battery system HVBS, in particular of the proposed HV junction device JD, in combination with the alternating charging concept enables new scaling concepts that might fit better to the OEM targets for their vehicle fleets.

Below an example of scaling the battery capacity with different battery packs of the HV junction device JD is provided. To enable the "400V"-EVSE compatibility the following pre-condition must be fulfilled:

- $$V_{max\_BP1} \ \& \ V_{max\_BP2} < V_{max\_\ 400V\text{-}EVSE} \ (= 500V)$$

- $$V_{min\_BP1} \ \& \ V_{min\_BP2} > V_{min\_400V\text{-}EVSE} \ (= 100V)$$

Assuming LiIon-NMC cells the following BP configurations mightbe interesting:

- Battery pack 1 BP1 (112 cells a 140Ah):        56kWh
- Battery pack 2 BP2 (40 ... 112 cells a 140Ah):  20kWh ... 56kWh
- Total battery capacity (BP1 + BP2):            76kWh ... 112kWh

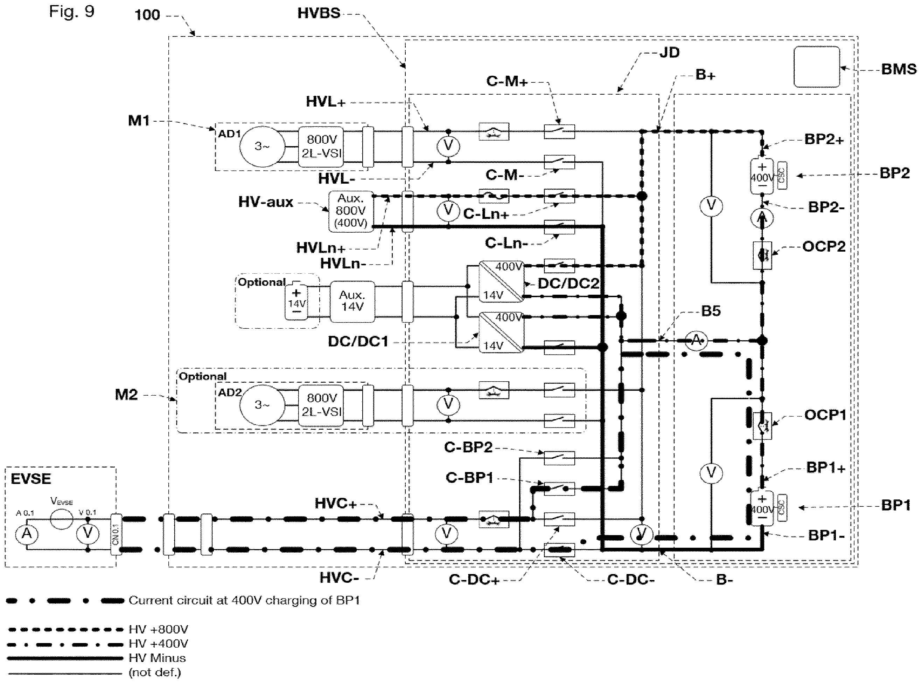

Figure 9 shows the energy flow and the voltage levels of the HV battery system HVBS according to Figures 7 in an alternating charing mode.

Reference Signs

| | |
|---|---|
| 100, 200 | electric vehicle |
| 101, 201 | battery system |
| 102, 202 | power distribution unit |
| 103, 203 | battery management system |
| 104, 106, 204, 206 | battery pack |
| 108, 208 | axle-drive |
| 110, 210 | optional axle-drive |
| 112, 212 | 14V-boardnet supply |
| 114, 214 | optional 14V-boardnet supply |
| 116, 216 | HV-aux loads |
| 118, 218 | overcurrent protection device |
| 221 | overcurrent protection device |
| 223 | current sensing element |
| 220 | battery switch matrix |
| CT1.1, CT1.2, CT1.3 | Battery switches |
| B- | second battery terminal |
| B+ | first battery terminal |
| B3 | third battery terminal |
| B4 | fourth battery terminal |
| B5 | fifth battery terminal |
| BP1 | first battery pack |

| | |
|---|---|
| BP1- | second battery pack terminal of first battery pack |
| BP1 + | first battery pack terminal of first battery pack |
| BP2 | second battery pack |
| BP2- | second battery pack terminal of second battery pack |
| BP2+ | first battery pack terminal of second battery pack |
| C-BP1 | fifth contactor |
| C-BP2 | sixth contactor |
| C-DC- | second contactor |
| C-DC+ | first contactor |
| C-Ln- | eighth contactor |
| C-Ln+ | seventh contactor |
| C-M- | fourth contactor |
| C-M+ | third contactor |
| DC/DC 1 | first DC/DC converter |
| DC/DC2 | second DC/DC converter |
| HV-aux | auxiliary high voltage loads |
| HVBS | high voltage battery system |
| HVC- | second high voltage charge terminal |
| HVC+ | first high voltage charge terminal |
| HVL- | second high voltage load terminal |
| HVL+ | first high voltage load terminal |
| JD | high voltage junction device |
| M1, M2 | first axle drive, second axle drive |
| OBC | on-board-charger |
| OPC1 | first overcurrent protection device |
| OPC2 | second overcurrent protection device |

**Claims**

1.  A junction device (JD) for a high voltage battery of an electric vehicle (100), wherein

    - the high voltage battery comprises a first battery pack (BP1) and a second battery pack (BP2) connected in series,
    - the first battery pack (BP1) and the second battery pack (BP2) each comprises a first battery pack terminal (BP1+, BP2+) and a second battery pack terminal (BP1-, BP2-),
    - the connection interconnecting the second battery pack terminal (BP2-) of the second battery pack (BP2) and the first battery pack terminal (BP1+) of the first battery pack (BP1) is free of any contactors and relays,

    and the junction device (JD) comprises

    - a first battery terminal (B+) for connecting the first battery pack terminal (BP2+) of the second battery pack (BP2) and a second battery terminal (B-) for connecting the second battery pack terminal (BP1-) of the first battery pack (BP1),
    - a high voltage output with a first high voltage load terminal (HVL+) and a second high voltage load terminal (HVL-) for connecting a high voltage load group,
    - a high voltage input with a first high voltage charge terminal (HVC+) and a second high voltage charge terminal (HVC-) for connecting an electric vehicle supply equipment,
    - a first contactor (C-DC+) and a second contactor (C-DC-), wherein the first terminal (B+) is connected to the first high voltage charge terminal (HVC+) via the first contactor (C-DC+) and the second battery terminal (B-) is connected to the second high voltage charge terminal (HVC-) via the second contactor (C-DC-),
    - a third contactor (C-M+) and a fourth contactor (C-M-), wherein the first battery terminal (B+) is connected to the first high voltage load terminal (HVL+) via the third contactor (C-M+) and the second battery terminal (B-) is connected to the second high voltage load terminal (HVL-) via the fourth contactor (C-M-),
    - a fifth contactor (C-BP1) and a sixth contactor (C-BP2) and a node (N) connectable to the second battery pack terminal (BP2-) of the second battery pack (BP2) and the first battery pack terminal (BP1+) of the first battery pack (BP1) for providing a voltage level of the connection between the first battery pack (BP1) and the second battery pack (BP2), wherein the node (N) is connected via the fifth contactor (C-BP1) to the first high voltage charge terminal (HVC+) and via the sixth contactor (C-BP2) to the second high voltage charge terminal (HVC-).

2. The junction device (JD) according to claim 1, further comprising a third battery terminal (B4) for connecting the second battery pack terminal (BP2-) of the second battery pack (BP2) and a fourth battery terminal (B3) for connecting the first battery pack terminal (BP1+) of the first battery pack (BP1).

3. The junction device (JD) according to claim 1, further comprising a further battery terminal (B5) for connecting the second battery pack terminal (BP2-) of the second battery pack (BP2) and the first battery pack terminal (BP1+) of the first battery pack (BP1).

4. The junction device (JD) according to any one of claims 1 to 3, wherein the junction device (JD) comprises at least one further high voltage output with a first terminal (HVLn+) and a second terminal (HVLn-), wherein the first battery terminal (B+) is connected to the first terminal (HVLn+) via a seventh contactor (C-Ln+) and the second battery terminal (B-) is connected to the second terminal (HVLn-) via an eighth contactor (C-Ln-).

5. A high voltage, HV, battery system (HVBS) comprising a high voltage battery for an electric vehicle and a junction device (JD) according to any one of claims 1 to 4, wherein

- the high voltage battery comprises a first battery pack (BP1) and a second battery pack (BP2) connected in series,
- the first battery pack (BP1) and the second battery pack (BP2) each comprises a first battery pack terminal (BP1+, BP2+) and a second battery pack terminal (BP1-, BP2-),
- in a connection interconnecting the second battery pack terminal (BP2-) of the second battery pack (BP2) and the first battery pack terminal (BP1+) of the first battery pack (BP1) a first overcurrent protection device (OCP1) related to the first battery pack (BP1) and a second overcurrent protection device (OCP2) related to the second battery pack (BP2) each comprising a fusible cut-out, or a pyro fuse are arranged, and
- the connection interconnecting the second battery pack terminal (BP2-) of the second battery pack (BP2) and the first battery pack terminal (BP1+) of the first battery pack (BP1) is free of any contactors and relays.

6. The HV battery system (HVBS) according to claim 5, wherein the first battery pack (BP1) and the second battery pack (BP2) have a different number of cells.

7. The HV battery system (HVBS) according to claim 5 or 6, wherein the first battery pack (BP1) and the second battery pack (BP2) comprise different types of cells.

8. A method for operating a high voltage battery system (HVBS) according to any one of claims 5 to 6, wherein during a charging mode, when an electric vehicle supply equipment is connected to the first high voltage charge terminal (HVC+) and the second high voltage charge terminal (HVC-) and high voltage direct current, DC, is received from the electric vehicle supply equipment, a switching state of each of the first contactor (C-DC+), second contactor (C-DC-), fifth contactor (C-BP1) and sixth contactor (C-BP2) is controlled such that the high voltage DC is alternatingly routed to the first battery pack (BP1) and the second battery pack (BP2).

9. The method according to claim 8, wherein a switching frequency for the alternating charging is selected dependent on a state of charge of the first battery pack (BP1) and/or dependent on a state of charge of the second battery pack (BP2).

10. Control apparatus for operating the HV battery system (HVBS), wherein the control apparatus is configured to perform the steps of the method according to claim 8 or 9.

11. Computer program comprising instructions which, when the program is executed by a controller or processor of a control unit, cause the control unit to carry out the steps of the method of claim 8 or 9.

12. A computer-readable medium having stored there on the computer program of claim 11.

Fig. 1

Prior Art

EP 4 353 518 A1

Fig. 2

Prior Art

Fig. 3

EP 4 353 518 A1

Fig. 4

Current circuit HV-load. HV-loads supplied with 800V
Current circuit EVSE. BPs charged with 800V

Fig. 5

Fig. 6

100 —

HVBS

HVL+

C-M+

C-DC+

JD

B+

BMS

BP2

M1 → AD1 800V

M2 → AD2 800V (opt.)

HVL-

OBC → OBC

HV-aux → Aux. 800V

C-M-

C-BP1

B4

OCP2

VBP2 CSC

DC/DC2

DC/DC1

Aux. 14V

14V

VBP2 14V

VBP1 14V

C-BP2

OCP1

B3

VBP1 CSC

BP1

HVC+
HVC-

C-DC-

B-

- - - - HV +800V
- · - · HV +400V
——— HV Minus
——— (not def.)

EP 4 353 518 A1

Fig. 7

Fig. 8a

Figure 8a — Circuit diagram with labels: JD, B+, B-, N, OCP1, OCP2, BP1, BP1 +, BP1 -, BP2, BP2 +, BP2 -, C-M+, C-M-, C-DC+, C-DC-, C-BP1, C-BP2, HVC +, HVC -, HVL +, HVL -, EVSE, HV Loads.

Current circuit HV-load. HV-loads supplied with 800V

Current circuit EVSE. BP1 charged with 400V

Fig. 8b

JD · B+ · BP2 + · BP2 · BP2 - · BP1 + · BP1 · BP1 - · B-

OCP2 · C-DC+ · C-BP1 · N · C-BP2 · C-DC- · OCP1

C-M+ · C-M-

HVC + · EVSE · HVC - · HVL + · HV Loads · HVL -

— — Current circuit HV-load. HV-loads supplied with 800V
▬▬ Current circuit EVSE. BP2 charged with 400V

Fig. 9

Europäisches
Patentamt

European
Patent Office

Office européen
des brevets

# EUROPEAN SEARCH REPORT

Application Number

EP 22 46 5559

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 7 110159 B2 (YAZAKI CORP) 1 August 2022 (2022-08-01) * figures 1,3,7-9,262,27,28 * * paragraphs [0117] - [0131], [0135] - [0149] * | 1-12 | INV. B60L53/14 B60L58/20 B60L58/21 B60R16/03 |
| A | US 2022/231537 A1 (HIROTA MASAYOSHI [JP] ET AL) 21 July 2022 (2022-07-21) * figures 1-7 * | 1-12 | ADD. B60L1/00 |
| A | US 2019/097436 A1 (ING ADAM H [US] ET AL) 28 March 2019 (2019-03-28) * figures 1-6,9a-9c * | 1-12 | |

TECHNICAL FIELDS
SEARCHED      (IPC)

B60L
B60R
H02J

The present search report has been drawn up for all claims

| Place of search | Date of completion of the search | Examiner |
|---|---|---|
| The Hague | 27 February 2023 | Gücin, Taha |

EPO FORM 1503 03.82 (P04C01)

**ANNEX TO THE EUROPEAN SEARCH REPORT
ON EUROPEAN PATENT APPLICATION NO.**

EP 22 46 5559

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2023

| Patent document cited in search report | | Publication date | Patent family member(s) | | Publication date |
|---|---|---|---|---|---|
| JP 7110159 | B2 | 01-08-2022 | JP | 7110159 B2 | 01-08-2022 |
| | | | JP | 2020150784 A | 17-09-2020 |
| US 2022231537 | A1 | 21-07-2022 | CN | 113711457 A | 26-11-2021 |
| | | | JP | WO2020230202 A1 | 25-11-2021 |
| | | | US | 2022231537 A1 | 21-07-2022 |
| | | | WO | 2020230202 A1 | 19-11-2020 |
| US 2019097436 | A1 | 28-03-2019 | NONE | | |

EPO FORM P0459

For more details about this annex : see Official Journal of the European Patent Office, No. 12/82